Europäisches Patentamt

European Patent Office

Office européen des brevets

(19)

(11) Veröffentlichungsnummer: **0 167 063**
**A1**

(12) # EUROPÄISCHE PATENTANMELDUNG

(21) Anmeldenummer: **85107577.0**

(51) Int. Cl.⁴: **F 16 L 11/18**

(22) Anmeldetag: **19.06.85**

(30) Priorität: **22.06.84 DE 8418855 U**

(43) Veröffentlichungstag der Anmeldung:
**08.01.86 Patentblatt 86/2**

(84) Benannte Vertragsstaaten:
**AT BE CH DE FR GB IT LI LU NL SE**

(71) Anmelder: **Lockwood Products**
**5615 S.W. Willow Lane Lake Oswego**
**Oregon 97034(US)**

(72) Erfinder: **Lockwood, Arnold L.**
**8350 S.W. Mapleleaf St.**
**Portland, Oregon 97223(US)**

(74) Vertreter: **Röbe-Oltmanns, Georg, Dr.**
**Dotzheimer Strasse 61**
**D-6200 Wiesbaden(DE)**

(54) **Flexibler Schlauch.**

(57) Schlauch aus einzelnen rohrförmigen Segmenten (1) flexibler wobei jeweils ein Ende eines Segmentes (1) in das andere Ende des anderen Segmentes (1) verstellbar eingesteckt ist.

FIG.3

EP 0 167 063 A1

Croydon Printing Company Ltd

Anmelderin: Firma Lockwood Products, 12190 S.W. Broadway, Beaverton, Oregon 97005, USA

Flexibler Schlauch

Die Erfindung betrifft einen flexiblen Schlauch, durch den beispielsweise Flüssigkeit zur Kühlung eines Werkstückes während dessen Bearbeitung auf einer Werkzeugmaschine transportiert wird. Wesentlich bei derartigen flexiblen Schläuchen ist, daß der Schlauch während der Bearbeitung des Werkstückes in seiner einmal eingerichteten Position verbleibt und somit während des ganzen Bearbeitungsvorganges das Auftreffen des Flüssigkeitsstrahles auf das Werkstück gewährleistet ist.

Es ist ein flexibler Schlauch bekannt, bei dem der eigentliche Schlauch von einer Metallspirale umgeben ist. Der hierdurch gebildete flexible Schlauch besitzt eine solche Steifigkeit, daß er in jede gewünschte Position gebogen werden kann und nach dem Biegen bei Fehlen äußerer Kräfte diese Position beibehält. Von Nachteil ist bei dem bekannten flexiblen Schlauch, daß er bereits bei Auftreten geringer äußerer Kräfte eine andere Position einnimmt. So können bereits Vibrationen der Werkzeugmaschine dazu führen, daß sich die Position des flexiblen Schlauches ändert. Ferner kann aufgrund des durch die strömende Flüssigkeit ausgeübten Impulses auf die Schlauchwände der Schlauch von der gebogenen in eine mehr gestreckte Position überführt werden. Die Folge ist, daß die durch den flexiblen Schlauch transportierte Flüssigkeit nicht mehr an die gewünschte Stelle des Werkstückes läuft.

Der bekannte flexible Schlauch weist ferner den Nachteil auf, daß er in der Länge nicht veränderlichist. Je nach Abstand des zu bearbeitenden Werkstückes muß somit der Schlauch mehr oder weniger stark gekrümmt werden. Eine stärkere Krümmung beinhaltet aber gerade verstärkt die Gefahr, daß der Schlauch während des Bearbeitungsvorganges seine Position nicht beibehält.

Aufgabe der Erfindung ist es einen flexiblen Schlauch, insbesondere zum Transport von Flüssigkeiten zu schaffen, dessen Länge universell veränderbar ist und der die Position, auf die er eingestellt ist, beibehält.

Gelöst wird die Aufgabe durch einen Schlauch der eingangs genannten Art, mit einzelnen rohrförmigen Segmenten, wobei jeweils ein Ende eines Segments in das andere Ende des anderen Segments verschwenkbar eingesteckt ist.

Durch die Möglichkeit,einzelne rohrförmige Segmente aneinander zu reihen, kann ein Schlauch beliebiger Länge gebildet werden. Hierzu ist es erfindungsgemäß nur nötig, die einzelnen Segmente ineinander zu stecken. Durch die verschwenkbare Anordnung der einzelnen Segmente zueinander ist die Flexibilität des Schlauches gegeben. Durch die Abstimmung der ineinandergreifenden Enden der Segmente zu - einander ist gewährleistet, daß die Segmente beim Durchtritt von Flüssigkeit durch diese ihre Position zueinander beibehalten.

Gemäß einer besonderen Ausführungsform der Erfindung ist vorgesehen, daß das eine Ende eines Segments als eine Durchgangsbohrung aufweisender Kugelkopf, das andere Ende des anderen Segments als kegelstumpfförmige Hülse ausgebildet ist. Zum Verbinden der einzelnen Segmente ist es somit nur nötig, den Kugelkopf des einen Segments in die kegelstumpfförmige Hülse des anderen Segments einzustecken. Die Flüssigkeit tritt dann während des Transportes durch die Durchgangsbohrung des Kugelkopfes und der kegelstumpfförmige Hülse.

Um zu gewährleisten, daß die durch den flexiblen Schlauch
transportierte Flüssigkeit den Schlauch in einer definierten Lage zum Schlauch verläßt, ist vorgesehen, daß
das eine Ende des letzten Segments in ein als kegelstumpfförmige Hülse ausgebildetes Segment verschwenkbar
eingesteckt ist, das an seiner dem letzten Segment abgewandten Seite eine Spritzdüse aufweist. Hindurch kann nicht
nur der flexible Schlauch insgesamt, sondern auch das die
Spritzdüse aufweisendes Segment ausgerichtet werden. Um
den flexiblen Schlauch mit einem pumpenseitigen Anschluß
verbinden zu können ist vorgesehen, daß in das andere
Ende des ersten Segments ein einen Kugelkopf aufweisendes
Segment verschwenkbar eingesteckt ist, das an seiner im
ersten Segment abgewandten Seite ein Gewinde aufweist.

Erfindungsgemäß besteht ein einzelnes Segment aus der
kegelstumpfförmigen Hülse und dem sich an den Teil der
Hülse anschließenden, die Durchgangsbohrung aufweisenden
Kugelkopf. Dabei ist vorgesehen, daß der sich erweiternde
Teil der Hülse eines Segments einen nach innen gerichteten
umlaufenden Vorsprung aufweist, der den Kugelkopf des
anderen Segments hintergreift. Zum Ineinanderstecken
zweier Segmente wird der umlaufende Vorsprung des einen
Segments an den Kugelkopf des anderen Segments gelegt,
und der Kugelkopf in die Hülse gepreßt, wobei dieser am
Vorsprung vorbeigeschoben wird und diesen hintergreift.

Gemäß einer besonderen Ausführungsform der Erfindung weist
der sich erweiternde Teil der Hülse eines Segments innen
eine umlaufende Rille auf, wobei der Durchmesser des
Kugelkopfes gleich dem Durchmesser der Hülse im Bereich
der Rille ist. Beim Ineinanderstecken zweier Segmente gelangt somit der Kugelkopf in jeder beliebigen Position
in Anlage mit der in der Hülse befindlichen Rille. Ein
Herausrutschen des Kugelkopfes aus dem hülsenförmigen
Teil ist ausgeschlossen, da der Durchmesser des Kugelkopfes geringfügig größer ist als der Durchmesser der
Hülse im Bereich des sich erweiternden Endes.

Auf grund der Ausbildung der einzelnen Segmente lassen sich
flexible Schläuche beliebiger Länge bilden. Die gegenseitige Anpassung der entsprechenden Enden der Segmente
ermöglicht es diese Enden dauerhaft miteinander zu verbinden, wobei die einzelnen Segmente zueinander unterschiedliche Positionen einnehmen können, infolge der
Abstimmung der Segmente aufeinander jedoch in der eingestellten Position selbst bei Vibrationen der Werkzeugmaschine bzw. bei höheren Flüssigkeitsdrücken verbleiben.

Weitere Merkmale der Erfindung sind in der Beschreibung
der Figuren und in den Unteransprüchen dargestellt, wobei
bemerkt wird, daß alle Einzelmerkmale und alle Kombinationen
von Einzelmerkmalen erfindungswesentlich sind.

In den Figuren ist die Erfindung an einer Ausführungsform beispielsweise dargestellt, ohne auf diese Ausführungsform beschränkt zu sein.

Figur 1 zeigt den erfindungsgemäßen flexiblen Schlauch
mit abgenommener Zuführung und abgenommener
Düse
Figur 2 einen Mittelschnitt durch ein erfindungsgemäßes
Segment
Figur 3 einen zusammengesteckten flexiblen Schlauch
in gebogener Position.

Der flexible Schlauch besteht aus mehreren Segmenten 1.

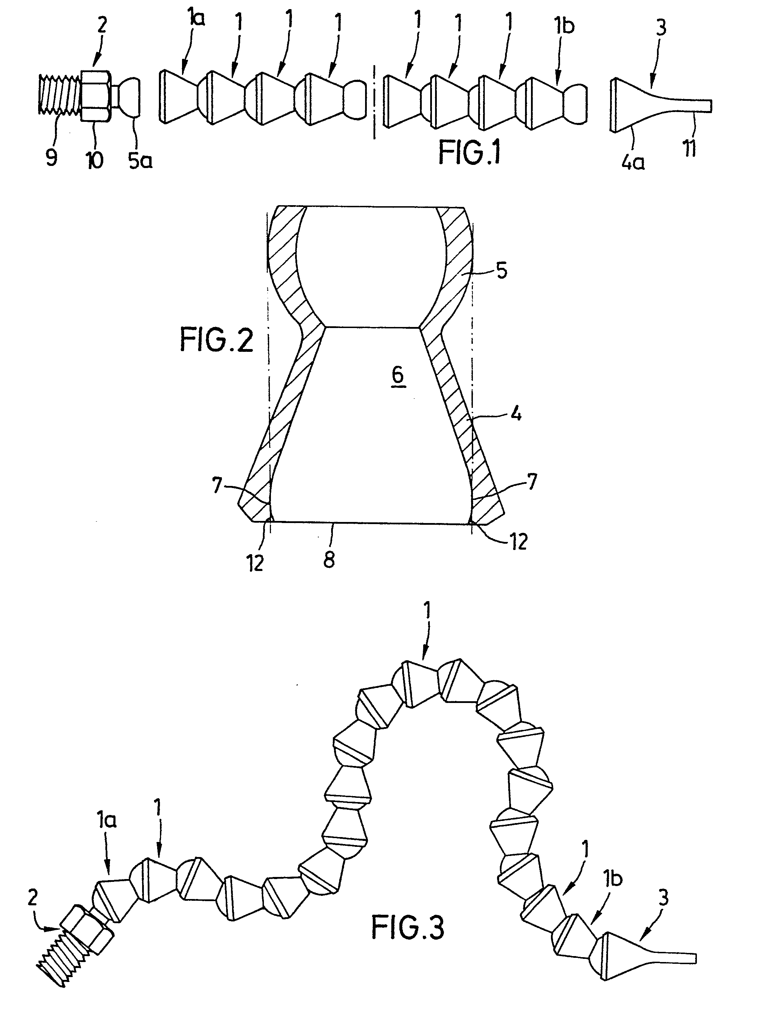

In Figur 1 verdeutlicht die strichpunktierte Linie,
daß der flexible Schlauch aus einer Vielzahl von Segmenten 1

gebildet sein kann. Das eine äußere Segment 1 a nimmt dabei ein Zuflußsegment 2, das andere äußere Segment 1 b das Düsensegment 3 auf. Jedes Segment 1 ist einteilig ausgebildet, es besteht aus einer kegelstumpfförmigen Hülse 4 und einem sich an den verjüngenden Teil der Hülse 4 anschließenden Kugelkopf 5. Innerhalb der Hülse 4 und des Kugelkopfes 5 befindet sich eine Durchgangsbohrung 6. Der sich erweiternde Teil der Hülse 4 weist innen eine umlaufende Rille 7 auf, wobei der Außendurchmesser des Kugelkopfes 5 gleich dem Innendurchmesser der Hülse 4 im Bereich der Rille 7 ist. Am sich erweiternden Ende 8 der Hülse 4 ist der Innendurchmesser der Hülse 4 geringfügig geringer als der Durchmesser im Bereich der Rille 7. Zum Zusammenfügen des biegsamen Schlauches werden jeweils zwei Segmente 1 derart ineinander gefügt, daß der Kugelkopf 5 des einen Segmentes 1 in Anlage mit dem Ende 8 des anderen Segmentes 1 gelangt. Durch leichtes Ineinanderpressen der beiden Segmente 1 kann der Kugelkopf 5 den Vorsprung 12 der Hülse 4 am Ende 8 passieren, so daß der Kugelkopf 5 in die Hülse 4 eintritt und mit seiner Außenkontur an der Rille 7 anliegt. Da die Rille 7 gleichfalls eine kugelförmige Kontur aufweist, kann der Kugelkopf 5 in der Rille 7 verschwenkt werden. Das Aufeinandergleiten der Flächen von Kugelkopf 5 und Rille 7 gewährleistet die Dichtheit der Segmente nach außen. Besonders einfach lassen sich die Segmente 1 ineinander pressen, wenn die Segmente aus Kunststoff hergestellt sind. Bei Verwendung dieses Materials ergeben sich zudem gute Gleiteigenschaften der Segmentteile aufeinander, weiterhin eine optimale Dichtigkeit der Segmente an den Verbindungsflächen zweier Segmente.

Das Zuflußsegment 2 weist einen Kugelkopf 5 a auf, der entsprechend dem Kugelkopf 5 einen Segmentes 1 gestaltet ist. An den Kugelkopf 5 a schließt sich statt der kegelstumpfförmigen Hülse 4 bei den Segmenten 1 eine mit einer nicht dargestellten Durchgangsbohrung versehene Schraube 9 mit Mutter 10 an. Das aus Schraube 9, Mutter 10 und Kugelkopf 5 a gebildete Zuflußsegment 2 ist einteilig und vorzugsweise gleichfalls aus Kunststoff hergestellt. Mittels der Schraube 9 kann der flexible Schlauch mit einem pumpenseitigen Aggregat verbunden werden.

Das Düsensegment 3 weist eine kegelstumpfförmige Hülse 4 a entsprechend der Hülse 4 eines Segmentes 1 auf. An diese kegelstumpfförmige Hülse 4 a schließt sich ein Strahlrohr 11 an. Das aus der Hülse 4 a und im Strahlrohr 11 gebildete Düsensegment 3 ist gleichfalls einteilig gebildet und besteht aus Kunststoff.

In der Figur 1 sind das Zuflußsegment 2 und das Düsensegment 3 aus rein zeichnerischen Gründen nicht mit dem flexiblen Schlauch verbunden. Um diese Teile miteinander zu verbinden, wird das Zuflußsegment 2 in das Segment 1a, das Segment 1 b in das Düsensegment 3 gepreßt. Es entsteht dann der in Figur 3 dargestellte Schlauch, der dort in gebogener Stellung gezeigt ist.

Wie veranschaulicht wird die Dichtheit bei dem erfindungsgemäßen Schlauch durch die gegenseitige Anpassung des Außendurchmessers des Kugelkopfes und des Durchmessers der in der Hülse angeordneten Rille erzielt. Im gleichen Sinne wirkt der an der Rille angeordnete Vorsprung, der an der Oberfläche des Kugelkopfes anliegt. Eine Steigerung der Dichtigkeit ist durch eine Vergrößerung der Flächenpressung zwischen Kugelkopf und Rille möglich, wodurch sich gleichzeitig der Kraftaufwand zum Verschwenken der Teile erhöht.

Vorstehend wurde eine Ausgangsform beschrieben, bei der die Außenkontur des Kugelkopfes in Anlage mit der Innenkontur der Hülse gelangt. Es ist jedoch gleichfalls im Sinne der Erfindung liegend, wenn der die Durchbrechung aufweisende Kugelkopf mit seiner Innenkontur in Anlage mit der Außenkontur der Hülse gelangt.

S c h u t z a n s p r ü c h e

1.) Flexibler Schlauch, insbesondere zum Transport von Flüssigkeiten, gekennzeichnet durch einzelne rohrförmige Segmente (1), wobei jeweils ein Ende eines Segments (1) in das andere Ende des anderen Segments (1) verschwenkbar eingesteckt ist.

2.) Flexibler Schlauch nach Anspruch 1, dadurch gekennzeichnet, daß das eine Ende des einen Segments (1) als eine Durchgangsbohrung (6) aufweisender Kugelkopf (5), das andere Ende des anderen Segments (1) als kegelstumpfförmige Hülse (4) ausgebildet ist.

3.) Flexibler Schlauch nach Anspruch 1 und/oder 2, dadurch gekennzeichnet, daß das eine Ende des letzten Segments (1 b) in ein als kegelstumpfförmige Hülse (4a) ausgebildetes Segment (3) verschwenkbar eingesteckt ist, das an seiner dem letzten Segment (1 b) abgewandten Seite eine Spritzdüse (11) aufweist.

4.) Flexibler Schlauch nach einem oder mehreren der Ansprüche 1 bis 3, dadurch gekennzeichnet, daß in das andere Ende des ersten Segments (1 a) ein als eine Durchgangsbohrung aufweisender Kugelkopf (5 a) ausgebildetes Segment (2) verschwenkbar eingesteckt ist, das an seiner dem ersten Segment (1 a) abgewandten Seite ein Gewinde (9) aufweist.

5.) Segment zum Herstellen eines flexiblen Schlauches nach einem oder mehreren der Ansprüche 1 bis 4, dadurch gekennzeichnet, daß das Segment (1) aus einer kegelstumpfförmigen Hülse (4) und einem sich an den verjüngenden Teil der Hülse (4) anschließenden, eine Durchgangsbohrung (6) aufweisenden Kugelkopf (5) besteht.

6.) Segment nach Anspruch 5, dadurch gekennzeichnet, daß der sich erweiternde Teil der Hülse (4) eines Segments (1) einen nach innen gerichteten umlaufenden Vorsprung (12) aufweist, der den Kugelkopf (5) des anderen Segments (1) hintergreift.

7.) Segment nach Anspruch 5 und/oder 6, dadurch gekennzeichnet, daß der sich erweiternde Teil der Hülse (4) eines Segments (1) innen eine umlaufende Rille (7) aufweist, wobei der Durchmesser des Kugelkopfes (5) gleich dem Durchmesser der Hülse (4) im Bereich der Rille (7) ist.

0167063

−1/1−

FIG.1

FIG.2

FIG.3

**0167063**

## EUROPÄISCHER RECHERCHENBERICHT

Europäisches
Patentamt

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| X | FR-A-1 098 836  (MOREAU)  * Insgesamt * | 1,2,5-7 | F 16 L  11/18 |
| X | US-A-1 695 263  (R.P. JACQUES)  * Anspruch 1; Figuren 2,4,6 * | 1 | |
| A | | 2,5-7 | |
| A | GB-A- 129 812  (DORMAN AND CO.)  * Figur 1 * | 1,4 | |
| | | | RECHERCHIERTE SACHGEBIETE (Int. Cl 4) |
| | | | F 16 L |

| | | |
|---|---|---|
| Der vorliegende Recherchenbericht wurde für alle Patentansprüche erstellt | | |
| Recherchenort DEN HAAG | Abschlußdatum der Recherche 24-09-1985 | Prüfer SCHAEFFLER C.A.A. |